# EUROPÄISCHE PATENTSCHRIFT

(11) **EP 1 683 854 B1**
(45) Veröffentlichungstag und Bekanntmachung des Hinweises auf die Patenterteilung: **02.07.2008**
(21) Anmeldenummer: 06000072.6
(22) Anmeldetag: 03.01.2006
(51) Int. Cl.: C12C 7/17

(54) **Verfahren zum Abläutern mit einem Läuterbottich**
Method for lautering in a lauter tun
Procédé de clarification dans une cuve filtre

(30) Priorität: 25.01.2005 DE 102005003462
(43) Veröffentlichungstag der Anmeldung: 26.07.2006
(73) Patentinhaber: KRONES AG, 93073 Neutraubling (DE)
(72) Erfinder: Wasmuht, Klaus Karl, 91792 Ellingen (DE); Stippler, Kurt, Dr.-Ing., 85417 Marzling (DE)
(74) Vertreter: Grünecker, Kinkeldey, Stockmair & Schwanhäusser Anwaltssozietät

(56) Entgegenhaltungen:
- EP-A- 0 419 442
- EP-A- 1 384 773
- DE-A1- 4 344 330
- DE-B- 1 059 861
- DE-C- 963 952

## Beschreibung

Die Erfindung betrifft ein Verfahren zum Abläutern von Würze bei der Bierherstellung mit einem Läuterbottich sowie einen Läuterbottich zum Durchführen des Verfahrens.
Der Läuterbottich ist das älteste und weitaus verbreitetste Läutergerät. Er wird zur Bierherstellung eingesetzt, um aus der Maische die Würze zu gewinnen. Am Ende des Maischprozesses besteht die Maische aus einem wässrigen Gemisch von gelösten und ungelösten Stoffen. Die wässrige Lösung der Extraktstoffe heißt Würze, die ungelösten Teile bezeichnet man Treber. Für die Bierherstellung wird nur die Würze benötigt, die zu diesem Zweck möglichst vollständig von den Trebem getrennt werden muss. Dieser Trennvorgang heißt Abläutem. Der Läuterbottich besteht im Wesentlichen aus einem zylindrischen Gefäß, auf dessen Senkboden, der oberhalb des Bottichbodens angeordnet ist, die Treber liegen bleiben, die die Würze dann filtrieren.
Nach dem Stand der Technik lässt man in den Läuterbottich zunächst Vorlagewasser einlaufen, das zum Austreiben der Luft dient, und bis etwas oberhalb des Senkbodens ansteht. Danach wird die Maische über den Senkboden eingelagert. Nach dem Einlagern der Maische erfolgt das Vorschießen und Trübwürzepumpen. Beim Vorschießen zieht die Lauterpumpe mehrmals kräftig mit hoher Leistung an, um die Filterschicht, die auf dem Senkboden liegt, zu verdichten. Dabei zieht im Stand der Technik die Pumpe das Vortagewasser an und fördert dieses dann wieder zurück in den Läuterbottich. Zwischen dem Bottichboden und dem Senkboden sammelt sich dann Bodenteig an, der aus durchgelaufenen Partikeln besteht. Dieser Bodenteig wird mit der ersten Würze, der sogenannten Trübwürze in den Läuterbottich zurückgepumpt. Durch diese Vorgehensweise bleibt die beim Maischen eingestellte Vorderwürzekonzentration nicht erhalten, sondern wird verdünnt und liegt bis zu 2% niedriger als die eingestellte Vorderwürzekonzentration. Die Ausbeute wird dadurch deutlich reduziert.

Aus der EP-A-1384773 ist bereits ein Läuterbottich bekannt mit einer umlaufenden Sammelwanne.

In der DE 44330 A1 wird ein Läuterverfahren beschrieben, bei dem Trübwürze in den Läuterbottich rückgeführt wird.

Hiervon ausgehend liegt der vorliegenden Erfindung die Aufgabe zugrunde, ein Verfahren und eine Vorrichtung zum Abläutern bereitzustellen, das eine extraktreichere Vorderwürze und damit eine höhere Ausbeute ermöglicht und gleichzeitig einfach und durchzuführen ist.

Erfindungsgemäß wird diese Aufgabe durch die Merkmale der Ansprüche 1 und 5 gelöst.
Da gemäß der vorliegenden Erfindung das Vorlagewasser beim Vorschießen nicht in den Läuterbottich zurückgepumpt wird bzw. die Trübwürze nicht in den Lauterbottich zurückgepumpt wird, kann diese beim Maischen eingestellte Vorderwürzekonzentration von beispielsweise 23% erhalten bleiben. Die Ausbeute im Läuterbottich steigt dadurch an. Darüber hinaus ergibt sich ein deutlicher Zeitgewinn, da die Menge an Wasservorlage bzw. Trübwürze bereits zügig abgepumpt wurde und nicht erst bei der Vorderwürze mit abgeläutert werden muss. Es ergibt sich daher auch eine Einsparung an dieser Menge beim Anschwänzwasser. Es kommt auch zu einem besseren Auswaschen der Treber, da es zu keinem Verdünnungseffekt bei stärkerer Vorderwürze kommt. Es ist daher ein konzentrierteres Brauen bei gleicher Pfannevollkonzentration möglich.
Das Vorlagewasser bzw. die Trübwürze kann auch in einen Tank gepumpt werden, der als Glattwassertank bzw. Trubgefäß dient.
Für den Nachguss kann dann zumindest teilweise Glattwasser vom vorherigen Sud plus Vorschieß und/oder Trübwürze des gleichen Suds verwendet werden. Nachdem der Nachguss abgeläutert worden ist, kann das Glattwasser in den Glattwassertank abgezogen werden und für den nächsten Sud verwendet werden.
Der Läuterbottich gemäß der vorliegenden Erfindung weist den Vorteil auf, dass er einerseits eine Einrichtung zum Abziehen der Würze aufweist, die eine umlaufende Sammelwanne umfasst, so dass auf eine komplizierte Verrohrung unterhalb des Bottichbodens verzichtet werden kann. Gleichzeitig weist der erfindungsgemäße Läuterbottich zusätzlich mindestens einen weiteren Ablauf unterhalb des Senkbodens auf, von dem aus das und/oder die Trübwürze und/oder Glattwasser in den Glattwassertank oder das Trubgefäß pumpbar ist. Somit kann beim Abziehen der Würze die Würze über die umlaufende Sammelwanne abgezogen werden, während das Vortagewasser und/oder die Trübwürze und/oder das Glattwasser zusätzlich über den weiteren Ablauf unterhalb des Senkbodens werden kann.

Vorteilhafterweise befindet sich der Ablauf im Bottichboden.

Der Bottichboden kann weiter im äußeren und/oder inneren Bereich Austrittsöffnungen aufweisen, über die die Würze in die Sammelwanne läuft. Die Sammelwanne kann seitlich an der Innen- und/oder Außenseite des Läuterbottichs und/oder unterhalb des Läuterbottichs angeordnet sein.

Vorteilhafterweise umfasst die Einrichtung zum Vermindern des Sogs einen Überlauf, dessen oberes Ende mindestens auf gleichem Niveau wie der Senkboden liegt. Durch die Einrichtung zum Vermindern des Sogs kann ein zu starkes Zusammenziehen der Treber verhindert werden.

Es ist möglich, dass der Ablauf über ein Ventil mit der Ableitung verbunden ist, die über eine Ventileinheit entweder mit einer Würzepfanne oder mit dem Glattwassertank bzw. dem Trubgefäß verbindbar ist. Der Ablauf kann aber auch direkt über mindestens ein Ventil mit dem Glattwassertank und/oder Trubgefäß verbindbar sein, wobei das Ventil geöffnet ist, wenn Vorlagewasser und/oder Trübwürze und/oder Glattwasser aus dem Läuterbottich abgepumpt wird.

Die vorliegende Erfindung wird nachfolgend unter Bezugnahme der begleitenden Zeichnungen näher erläutert werden.
- Fig. 1: zeigt schematisch einen Schnitt durch einen erfindungsgemäßen Läuterbottich,
- Fig. 2: zeigt ein Diagramm, in dem die Würzekonzentration in Abhängigkeit der Läutermenge bzw. der Läuterzeit aufgetragen ist,
- Fig. 3: zeigt schematisch einen Läuterbottich zusammen mit einem Glattwassertank sowie einem Trubgefäß,
- Fig. 4: zeigt ein Flussdiagramm der vorliegenden Erfindung.

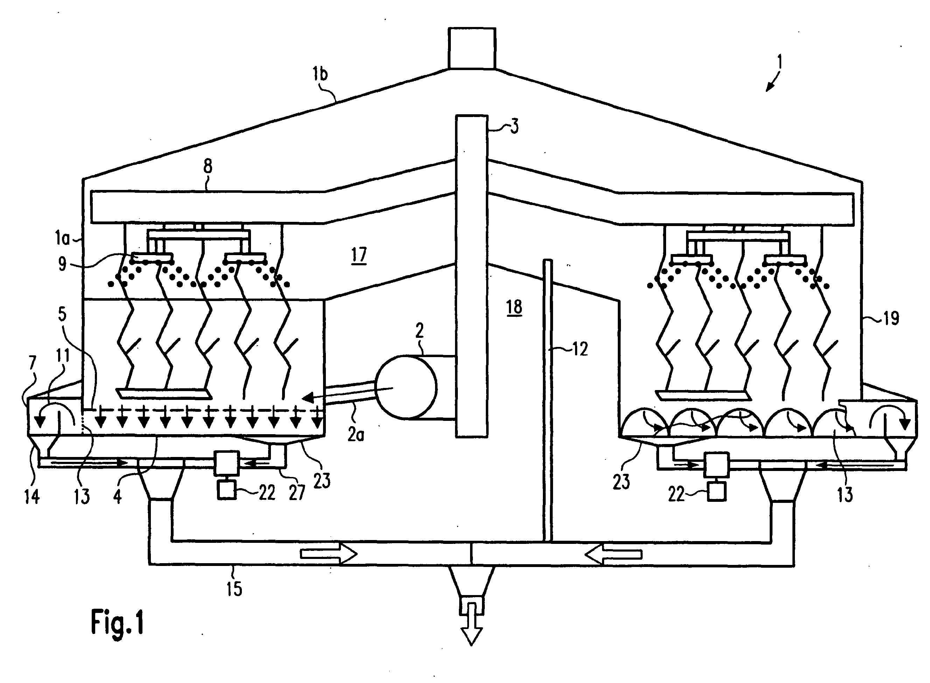

Fig. 1 zeigt einen erfindungsgemäßen Läuterbottich 1 zum Durchführen des erfindungsgemäßen Verfahrens, wobei die linke Hälfte der Fig. 1 einen Schnitt durch die Mitte des Läuterbottichs zeigt, während die rechte Hälfte der Fig. 1 einen Schnitt im Bereich der Sammelwanne zeigt.

Der Läuterbottich 1 besteht im Wesentlichen aus einem zylindrischen Gefäß 1 a mit einer Dunsthaube 1 b. Der Läuterbottich 1 weist einen nicht dargestellten Zulauf, z.B. für Maische auf, der von unten in den Maischeverteiler 2 führt. Der Maischeverteiler 2 ist in einem zentralen Freiraum 18 um eine zentrale Antriebswelle 3 herum angeordnet und vom eigentlichen Läuterinnenraum 17 umgeben. Der Maischeverteiler 2 ist hier ringförmig ausgebildet und umgibt die zentrale Antriebswelle 3. Von dem Maischeverteiler 2 gehen Maischezulaufstutzen 2a ab, die in den Innenraum 17 münden. Die Zufuhr, z.B. die Zufuhr der Maische, kann über ein nicht dargestelltes Stellventil geregelt werden. Es können mehrere Maischezulaufstutzen 2a vorgesehen sein. Im Innenraum 17 des Läuterbottichs 1 ist weiter eine Aufhack- und Austrebereinrichtung 8 mit Aufhackmessem 10 gezeigt. Weiterhin sind Einrichtungen 9 z.B. zum Anschwänzen vorgesehen. Die Aufhack- und Austrebereinrichtung 8 wird durch die zentrale Antriebswelle 3 in Drehung versetzt und kann nach oben und unten angehoben oder abgesenkt werden, um die Schnitttiefe der Hackmesser 10 zu bestimmen. Nach unten wird der Läuterbottich 1 durch den Bottichboden 4, der ringförmig ausgebildet ist begrenzt. Oberhalb des Bottichbodens 4 ist ein Senkboden 5 angeordnet, der eine Siebstruktur aufweist, und auf dem sich die Treber als natürliche Filterschicht ablagern können. Wie insbesondere aus der rechten Hälfte der Fig. 1 hervorgeht, weist dieses Ausführungsbeispiel an der Außenseite 19 des Läuterbottichs 1 über den Umfang des Läuterbottichs verteilte Austrittsöffnungen 13 auf, durch die die Würze aus dem Läuterbottich 1 in eine nachfolgend näher beschriebene Sammelwanne 7 austreten kann. Bei diesem Ausführungsbeispiel erstreckt sich die Höhe der Öffnungen 13 vom Bottichboden 4 hin bis zum Senkboden 5. Hier ist die Sammelwanne 7 ringförmig ausgebildet. Sie ist an die Außenseite 19 des Bottichbodens 4 angesetzt und wird beispielsweise angeschweißt. Von der umlaufenden Sammelwanne 7 führt zumindest eine Ableitung 15 weg, die über eine Läutertulpe 14 mit der Sammelwanne 7 verbunden ist. In der Sammelwanne 7 ist ein Überlauf 11 ausgebildet. Der Überlauf 11 erstreckt sich hier von einer Verlängerung des Bottichbodens 4, der über die Außenseite 19 des Läuterbottichs hervorsteht nach oben, so dass das obere Ende des Überlaufs 11 mindestens auf gleichem Niveau wie der Senkboden 5 liegt. Der Überlauf 11 ist vorgesehen, um den Sog zu vermindern, der dadurch entstehen kann, dass mehr Würze abzufließen versucht, als durch den Treberwiderstand nachfließen kann. Ein solcher Sog bewirkt, dass sich die Treber, die auf dem Senkboden 5 als natürliche Filterschicht liegen, zusammenziehen, wodurch der Treberwiderstand wiederum vergrößert wird. Die Vorrichtung umfasst weiter ein Steigrohr 12, in das die Würze, die aus der Sammelwanne 7 läuft, aufsteigen kann. Die Steighöhe der Würze entspricht dem Saugdruck, über den wiederum der Treberwiderstand ermittelt werden kann, so dass der Prozess entsprechend gesteuert werden kann, wobei der Saugdruck mit einer kapazitiven Sonde zur Niveauregelung bestimmt wird.

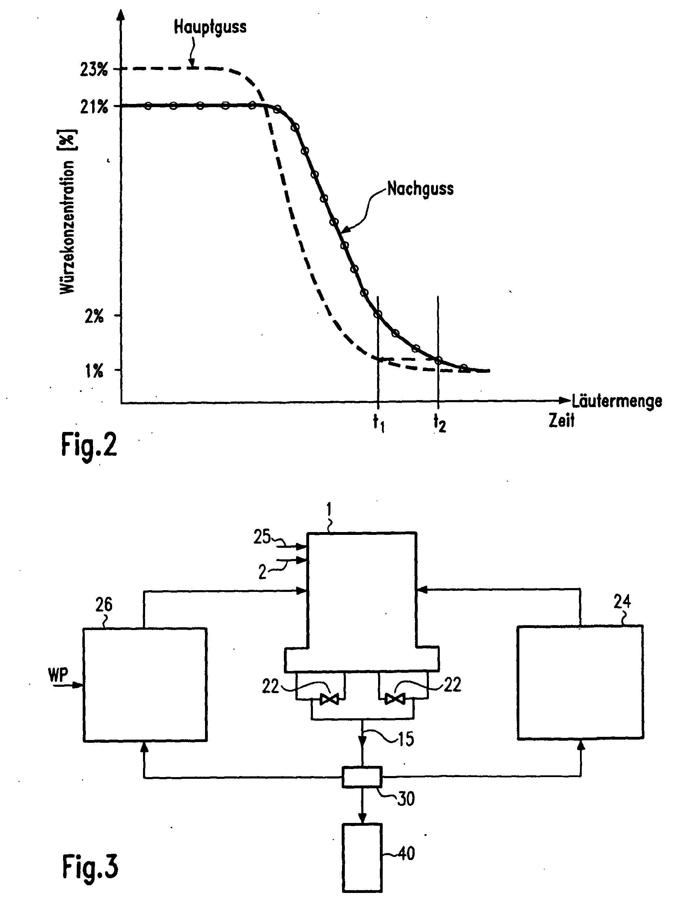

Die Öffnungen 13 sowie die Sammelwanne 7 dienen als Einrichtung zum Abziehen der Würze 7. Der erfindungsgemäße Läuterbottich weist darüber hinaus einen weiteren Ablauf 23 im Bottichboden 4 auf, der insbesondere dazu dient, das Vorlagewasser und/oder die Trubwürze und/oder das Glattwasser in den Glattwassertank 24 und/oder das Trubgefäß 26 oder einen entsprechenden Behälter, der als Glattwassertank und Trubgefäß dient, zu pumpen, wie nachfolgend noch näher erläutert wird. Dabei ist mindestens ein weiterer Ablauf 23 vorgesehen. Der Ablauf 23 ist jeweils über einen weiteren Trichter mit der Ablaufleitung 27 verbunden, die wiederum in die Ablaufleitung 15 mündet und von dieser durch ein Ventil 22 getrennt wird. Die Ablaufleitung 15 führt wie aus Fig. 3 hervorgeht, einerseits zur Würzpfanne 40, und ist darüber hinaus auch mit einem Glattwassertank 24 verbunden, der wiederum eine Leitung aufweist, die zum Läuterbottich 1 zurückführt. Die Leitung 15 kann auch, wie aus Fig. 3 hervorgeht, mit einem Trubgefäß 26, der Trüb aus dem Whirlpool WP aufnimmt, verbunden sein. Es ist weiter ein Ventilsystem 30 vorgesehen, dessen Schaltzustand bestimmt, ob die Leitung 15 mit dem Glattwassertank 24 und/oder alternativ dem Trubgefäß 26 oder mit der Würzepfanne 40 verbunden ist. Der Läuterbottich 1 weist u.a. weiter die Maischezuleitung 2 auf, sowie eine Versorgung 25 mit Warmwasser.

Nachfolgend wird das erfindungsgemäße Verfahren im Zusammenhang mit dem in Fig. 1 und 3 beschriebenen Läuterbottich erläutert. Es sollte jedoch angemerkt werden, dass das erfindungsgemäße Verfahren mit allen herkömmlichen Läuterbottichen, die im Bottichboden Anstichöffnungen zum Abläutern aufweisen, durchgeführt werden kann.

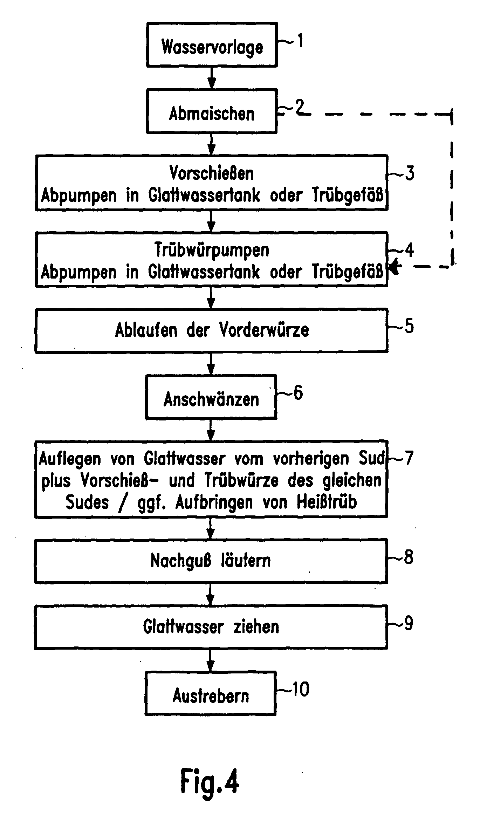

Das erfindungsgemäße Verfahren wird unter Bezugnahme des Flussdiagramms in Fig. 4 weiter erläutert.

Um eine rasche Abläuterung zu bewirken, muss der Senkboden frei von Verunreinigungen und Luftblasen sein. Man drückt deshalb heißes Vorlagewasser unter den Senkboden 5 und wärmt ihn dadurch zugleich an (Schritt 1). Das Vorlagewasser steht bis kurz unterhalb oder etwas oberhalb des Senkbodens 5 an.

Danach erfolgt das Abmaischen (Schritt 2), wobei die Maische möglichst schnell über den Maischeverteiler 2 eingebracht und gleichmäßig verteilt wird.

Gegebenenfalls folgt eine kurze Läuterruhe, in deren Verlauf sich der Treberkuchen absetzen kann.

Im Anschluss erfolgt optional das sogenannte Vorschießen (Schritt 3), wobei eine nicht in den Figuren eigens dargestellte Läuterpumpe mehrfach eingeschaltet wird und so das Vorlagewasser über die Ableitung 15 anzieht. Hierbei wird das Vorlagewasser nicht wie im Stand der Technik in den Läuterbottich 1 zurückgeführt, sondern wird in den Glattwassertank 24 und/oder in das Trubgefäß 26 durch Schalten der entsprechenden Ventile 30 gepumpt.

Bei dem in Fig. 1 gezeigten Läuterbottich werden zum Vorschießen die Ventile 22 geöffnet, so dass das Vorlagewasser auch über den Ablauf 23 abgeführt werden kann, der keine Einrichtung zum Vermindern des Sogs aufweist, so dass die Läuterpumpe das Vorlagewasser mit hoher Leistung abpumpen kann.

Der Schritt 3 kann systembedingt entfallen, keinesfalls das Trübwürzepumpen, das im Zusammenhang mit Schritt 4 erläutert wird.

Zwischen dem Bottichboden und dem Senkboden sammelt sich ein Bodenteig an, der aus durchgelaufenen Partikeln besteht. Die erste Würze, die durchläuft, ist trüb und wird daher auch Trübwürze genannt. Im Anschluss an das Vorschießen bzw. nach dem Abmaischen erfolgt daher das Trübwürzepumpen (Schritt 4), wobei die Läuterpumpe, die hier nicht dargestellt ist, die Trübwürze mit verringerter Leistung abpumpt. Zum Abpumpen der Trübwürze können auch hier die Ventile 22 geöffnet werden, so dass die Trübwürze über den Ablauf 23 abläuft. Die Trübwürze wird nicht in den Läuterbottich 1 zurückgepumpt, sondern durch Schalten der Ventileinheit 30 entweder in den Glattwassertank 24 und/oder das Trubgefäß 26 eingebracht.

Im Anschluss erfolgt das Abläutern der Vorderwürze (Schritt 5), d.h. der Hauptguss. Das Abläutern ist hier ein Filtrationsvorgang, bei dem die Treber, die auf dem Senkboden 5 liegen, die Rolle des Filtermaterials übernehmen. Beim Abläutern der Vorderwürze tritt die Würze, die durch die Treberschicht gelaufen ist, durch die Öffnungen 13 in die Sammelwanne 7 und tritt über den Überlauf 11 in die Ablaufleitung 15, wo sie der Würzepfanne 40 zugeführt wird. Das Ventil 22 bzw. die Ventile 22 bleiben hier geschlossen. Wenn die Vorderwürze von den Trebem abgelaufen ist, bleibt in ihnen Extrakt zurück. Diesen Extrakt muss man noch gewinnen, um rationell zu arbeiten. Die Treber werden deshalb nach dem Ablauf der Vorderwürze durch Anschwänzwasser ausgewaschen (Schritt 6). Die ablaufenden dünneren Würzen heißen Nachgüsse. Hierzu wird z.B. Anschwänzwasser über die Einrichtung 9 in das Innere 17 des Läuterbottichs 1 eingebracht. Das Anschwänzen sollte erfolgen, solange die Treber gerade noch vollständig mit Flüssigkeit bedeckt sind und keine Luft einziehen kann. Das Anschwänzwasser wird 40 bis 50 Millimeter über die Treber aufgebracht. Dann erfolgt das Auflegen des Glattwassers vom vorherigen Sud plus Vorschieß- und Trübwürze des gleichen Sudes aus dem Glattwassertank 24.

Schließlich wird der Nachguss abgeläutert (Schritt 8). Dabei tritt die Würze, die, wie zuvor im Zusammenhang mit dem Abläutern der Vorderwürze beschrieben, durch die Treberschicht auf den Senkboden 5, durch die Öffnungen 13, die an der Außenseite des Läuterbottichs 1 vorgesehen sind, in die Sammelwanne 7 und tritt über den Überlauf 11 in die Ablaufleitung 15, wo sie der Würzpfanne 40 zugeführt wird. Die Ventile 22 bleiben hier geschlossen. Das Ende des Abläuterns wird durch die Messung der Würzekonzentration in der Pfanne 40 bestimmt. Die letzte ablaufende Würze, das Glattwasser, mit geringem Extrakt, z.B. 0,5 bis 1% Extrakt bei 12%igen Pfannevollwürzen bzw. Ausschlagwürzen, wird nicht mehr in die Würzepfanne 40 gegeben, da es die Würze zu weit verdünnen würde. Dieses Glattwasser wird, wie aus Fig. 3 hervorgeht, ebenfalls in den Glattwassertank 24 geleitet und kann dann für nachfolgende Sude für den Nachguss, aber auch zum Einmaischen verwendet werden (Schritt 9). Diese Restentleerung des Läuterbottichs erfolgt dann über die Entleerungstulpe (n) 23 und Ventil 22.

Nach dem Ablauf des Glattwassers wird mit der Aufhack- und Auftrebereinrichtung der Treber aufgeschnitten bzw. aufgehackt und z.B. zur Treberluke (nicht dargestellt) hinausgeschoben.

In Zusammenhang mit Fig. 3 wurde beschrieben, dass die Vorschieß- und Trubwürze alternativ oder zusätzlich auch in das Trubgefäß 26 eingebracht werden kann. In das Trubgefäß 26 wird im Sudhausprozess in bekannter Weise Trub aus dem Whirlpool eingebracht. Es ist dann vorteilhaft, die Vorschieß- und/oder Trubwürze in das Trubgefäß 26 einzubringen, wenn beim Läuterprozess anstatt oder zusätzlich zum Auflegen des Glattwassers Heißtrub aus dem Trubgefäß 26 zum Anschwänzwasser gebracht wird (Schritt 7).

Die gestrichelte Linie in Fig. 2 zeigt die Würzekonzentration in Abhängigkeit der Läutermenge bzw. Zeit gemäß der vorliegenden Erfindung und die gepunktete Linie die Würzekonzentration in Abhängigkeit der Läutermenge bzw. Läuterzeit gemäß dem Stand der Technik. Wie aus Fig. 2 hervorgeht, bleibt gemäß der vorliegenden Erfindung die beim Maischen eingestellte Vorderwürzekonzentration von etwa 23% erhalten, während die Würzekonzentration im Stand der Technik bis zu 2% geringer ist, da hier das Vorlagewasser bzw. die Trübwürze dem Läuterbottich zurückgepumpt wird, was zu einer Verdünnung führt. Somit kann die Ausbeute im Läuterbottich ansteigen. Da gemäß der vorliegenden Erfindung das Vorlagewasser zügig abgepumpt wurde und nicht zusätzlich bei der Vorderwürze mit abgeläutert werden muss, kommt es zu einem deutlichen Zeitgewinn. Während der Läuterprozess gemäß der Erfindung bereits zum Zeitpunkt t₁ abgeschlossen ist, ist beim herkömmlichen Läuterverfahren der Läuterprozess erst später zu einem Zeitpunkt t₂ abgeschlossen. Dies ermöglicht wiederum eine Einsparung an Anschwänzwasser. Zusätzlich können die Treber besser ausgewaschen werden, da es bei stärkerer Vorderwürze zu keinem Verdünnungseffekt kommt. Somit ist ein noch konzentrierteres Brauen bei gleicher Pfannenvollkonzentration möglich.

## Patentansprüche

1. Verfahren zum Abläutern von Würze bei der Bieherstellung mit einem Läuterbottich (1), wobei vor dem Abläutern der Vorderwürze Vorlagewasser unter den Senkboden (5) des Lauterbottichs (1) eingebracht wird, die Maische in den Läuterbottich (1) abgemaischt wird, wonach ein Trübwürzepumpen und optional vor dem Trübwürzepumpen ein Vorschießen erfolgt,
**dadurch gekennzeichnet,**
**dass** beim Vorschießen das Vorlagewasser in einen Glattwassertank (24) und/oder ein Trubgefäß (26) gepumpt wird und/oder
beim Trübwürzepumpen die Trübwürze in einen Glattwassertank (24) und/oder ein Trubgefäß (26) gepumpt wird.

2. Verfahren nach Anspruch 1,
**dadurch gekennzeichnet, dass**
das Vorlagewasser und/oder die Trübwürze in einen Tank gepumpt wird, der als Glattwassertanks bzw. Trubgefäß dient.

3. Verfahren nach Anspruch 1,
**dadurch gekennzeichnet,**
**dass** nach dem Abläutern der Vorderwürze für den Nachguss zumindest teilweise Glattwasser vom vorherigen Sud plus Vorschieß- und/oder Trübwürze des gleichen Suds aus dem Glattwassertank und/oder Trubgefäß verwendet wird.

4. Verfahren nach Anspruch 1 oder 2,
**dadurch gekennzeichnet,**
**dass** nachdem der Nachguss abgeläutert worden ist, Glattwasser in den Glattwassertank (24) abgezogen wird.

5. Läuterbottich (1) zum Durchführen des Verfahrens nach mindestens einem der Ansprüche 1 bis 4, mit einem Bottichboden (4) und einem darüber angeordneten Senkboden (5), sowie einer Einrichtung zum Abziehen der Würze (7),
**dadurch gekennzeichnet,**
**dass** die Einrichtung zum Abziehen der Würze (7) eine am Lauterbottich umlaufende Sammelwanne (7), von der zumindest eine Ableitung (15) wegführt, sowie eine Einrichtung (11) zum Vermindern des Sogs aufweist und mindestens ein weiterer mit einem Glattwassertank (24) und/oder einem Trubgefäß (26) in Verbindung stehender Ablauf (23) unterhalb des Senkbodens (5) vorgesehen ist, von dem aus das Vorlagewasser und/oder die Trübwürze und/oder das Glattwasser in einen Glattwassertank (24) und/oder ein Trubgefäß (26) pumpbar ist.

6. Läuterbottich nach Anspruch 5,
**dadurch gekennzeichnet, dass**
ein Tank als Glattwassertank und Trübgefäß dient.

7. Läuterbottich (1) nach Anspruch 5 oder 6,
**dadurch gekennzeichnet,**
**dass** der weitere Ablauf (23) im Bottichboden vorgesehen ist.

8. Läuterbottich (1) nach mindestens einem der Ansprüchen 5 bis 7,
**dadurch gekennzeichnet,**
**dass** der Bottichboden (4) im äußeren und/oder inneren Bereich Austrittsöffnungen (13) aufweist, über die die Würze in die Sammelwanne (7) läuft.

9. Läuterbottich (1) nach mindestens einem der vorhergehenden Ansprüche,
**dadurch gekennzeichnet,**
**dass** die Sammelwanne (7) seitlich an Innen- und/oder Außenseite (19/22) des Läuterbottichs und/oder unterhalb des Läuterbottichs (1) angeordnet ist.

10. Läuterbottich (1) nach mindestens einem der vorhergehenden Ansprüche,
**dadurch gekennzeichnet,**
**dass** in der Sammelwanne (7) die Einrichtung zum Vermindern des Sogs (11) als Überlauf ausgebildet ist, dessen oberes Ende mindestens auf gleichem Niveau wie der Senkboden (5) liegt.

11. Läuterbottich (1) nach mindestens einem der vorhergehenden Ansprüche,
**dadurch gekennzeichnet,**
**dass** der Ablauf (23) über ein Ventil (22) mit der Ableitung (15) verbunden ist, die über eine Ventileinheit (30) entweder mit einer Würzepfanne (40) oder mit dem Glattwassertank (24) bzw. dem Trubgefäß (26) verbindbar ist.

12. Läuterbottich (1) nach mindestens einem der vorhergehenden Ansprüche,
**dadurch gekennzeichnet,**
**dass** der Ablauf (23) über mindestens ein Ventil (22) mit dem Glattwassertank (24) und/oder Trubgefäß (26) verbindbar ist, wobei das Ventil (22) geöffnet ist, wenn Vorlagewasser und/oder Trübwürze und/oder Glattwasser aus dem Läuterbottich abgepumpt wird.

## Claims

1. Method of lautering wort during beer production in a lauter tun (1), wherein, before lautering the first wort, foundation water is introduced below the false bottom (5) of the lauter tun (1), final mash pumping of the mash into the lauter tun (1) is performed, after which cloudy wort pumping and, optionally before the cloudy wort pumping, run off proceed, **characterized in that**
during the run off the foundation water is pumped into a last runnings tank (24) and/or a trub vessel (26) and/or
during cloudy wort pumping, the cloudy wort is pumped into a last runnings tank (24) and/or a trub vessel (26).

2. Method according to Claim 1, **characterized in that** the foundation water and/or the cloudy wort is pumped into a tank which acts as last runnings tank or trub vessel.

3. Method according to Claim 1, **characterized in that**, after lautering the first wort, for the sparging, use is made at least in part of last runnings from the previous brew plus runoff wort and/or cloudy wort of the same brew from the last runnings tank and/or trub vessel.

4. Method according to Claim 1 or 2, **characterized in that** after the sparging has been lautered, last runnings are drawn off into the last runnings tank (24).

5. Lauter tun (1) for carrying out the method according to at least one of Claims 1 to 4, having a tun bottom (4) and a false bottom (5) arranged thereabove, and also an appliance for drawing off the wort (7), **characterized in that** the appliance for drawing off the wort (7) has a circumferential collecting tank (7) on the lauter tun, from which collecting tank at least one outer line (15) leaves, and also an appliance (11) for decreasing suction, and at least one further outlet (23) connected to a last runnings tank (24) and/or a trub vessel (26) is provided beneath the false bottom (5), from which outlet the foundation water and/or the cloudy wort and/or the last runnings can be pumped into a last runnings tank (24) and/or a trub vessel (26).

6. Lauter tun according to Claim 5, **characterized in that** one tank acts as last runnings tank and trub vessel.

7. Lauter tun (1) according to Claim 5 or 6, **characterized in that** the further outlet (23) is provided in the tun bottom.

8. Lauter tun (1) according to at least one of Claims 5 to 7, **characterized in that** the tun bottom (4), in the outer and/or inner zone, has outlet orifices (13) via which the wort runs into the collecting tank (7).

9. Lauter tun (1) according to at least one of the preceding claims, **characterized in that** the collecting tank (7) is arranged laterally on the inside and/or outside (19/22) of the lauter tun and/or beneath the lauter tun (1).

10. Lauter tun (1) according to at least one of the preceding claims, **characterized in that**, in the collecting tank (7), the appliance for reducing suction (11) is constructed as an overflow, the upper end of which is at least at the same height as the false bottom (5).

11. Lauter tun (1) according to at least one of the preceding claims, **characterized in that** the outlet (23) is connected via a valve (22) to the outlet line (15) which is connectable via a valve unit (30) either to a wort copper (40) or to the last runnings tank (24) or trub vessel (26).

12. Lauter tun (1) according to at least one of the preceding claims, **characterized in that** the outlet (23) is connectable via at least one valve (22) to the last runnings tank (24) and/or trub vessel (26), wherein the valve (22) is open when foundation water and/or cloudy wort and/or last runnings is pumped off from the lauter tun.

## Revendications

1. Procédé de clarification du moût lors de la fabrication de la bière dans une cuve-filtre (1), dans lequel, avant la clarification du premier moût, de l'eau du collecteur est introduite au-dessous du fond abaissé (5) de la cuve-filtre (1), l'empâtage est fini dans la cuve-filtre (1), à la suite de quoi s'effectue un pompage du moût trouble et en option une première clarification avant le pompage du moût trouble, **caractérisé en ce que,** lors de la première clarification, l'eau du collecteur est pompée dans un réservoir de dernier lavage (24) et/ou un récipient de trouble (26) et/ou, lors du pompage du moût trouble, le moût trouble est pompé dans un réservoir de dernier lavage (24) et/ou un récipient de trouble (26).

2. Procédé suivant la revendication 1, **caractérisé en ce que** l'eau du collecteur et/ou le moût trouble sont pompés dans un réservoir, qui sert de réservoir de dernier lavage ou de récipient de trouble.

3. Procédé suivant la revendication 1, **caractérisé en ce que,** après la clarification du premier moût, du dernier lavage du brassin précédent plus du moût de première clarification et/ou moût trouble du même brassin sont utilisés pour le moût secondaire, au moins en partie, à partir du réservoir de dernier lavage et/ou du récipient de trouble.

4. Procédé suivant l'une des revendications 1 et 2, **caractérisé en ce que,** après que le moût secondaire a été clarifié, du dernier lavage est soutiré dans le réservoir de dernier lavage (24).

5. Cuve-filtre (1) pour la mise en oeuvre du procédé suivant l'une au moins des revendications 1 à 4, comprenant un fond de cuve (4) et un fond abaissé (5) disposé au-dessus de ce dernier, ainsi qu'un dispositif de soutirage du moût (7), **caractérisée en ce que** le dispositif de soutirage du moût (7) comporte une cuve collectrice (7) entourant la cuve-filtre, dont part au moins une conduite d'évacuation (15), ainsi qu'un dispositif (11) de réduction de la succion, et au moins une autre issue (23), raccordée à un réservoir de dernier lavage (24) et/ou à un récipient de trouble (26), est prévue au-dessous du fond abaissé (5), issue à partir de laquelle l'eau du collecteur et/ou le mout trouble et/ou le dernier lavage peuvent être pompés dans un réservoir de dernier lavage (24) et/ou un récipient de trouble (26).

6. Cuve-filtre suivant la revendication 5, **caractérisée en ce qu'**un réservoir sert de réservoir de dernier lavage et de récipient de trouble.

7. Cuve-filtre (1) suivant l'une des revendications 5 et 6, **caractérisée en ce que** l'autre issue (23) est prévue dans le fond de la cuve-filtre.

8. Cuve-filtre (1) suivant l'une au moins des revendications 5 à 7, **caractérisée en ce que** le fond (4) de la cuve-filtre comporte dans la zone extérieure et/ou intérieure des ouvertures de sortie (13), au travers desquelles le moût s'écoule dans la cuve collectrice (7).

9. Cuve-filtre (1) suivant l'une au moins des revendications précédentes, **caractérisée en ce que** la cuve collectrice (7) est disposée latéralement sur le côté intérieur et/ou sur le côté extérieur (19/22) de la cuve-filtre et/ou au-dessous de la cuve-filtre (1).

10. Cuve-filtre (1) suivant l'une au moins des revendications précédentes, **caractérisée en ce que**, dans la cuve collectrice (7), le dispositif de réduction de la succion (11) est réalisé sous forme de trop-plein, dont l'extrémité supérieure se situe au moins au même niveau que le fond abaissé (5).

11. Cuve-filtre (1) suivant l'une au moins des revendications précédentes, **caractérisée en ce que** l'issue (23) est raccordée par l'intermédiaire d'une vanne (22) à la conduite d'évacuation (15), laquelle conduite peut être raccordée, par l'intermédiaire d'une unité de vannes (30), soit à une cuve à houblonner (40) soit au réservoir de dernier lavage (24) ou au récipient de trouble (26).

12. Cuve-filtre (1) suivant l'une au moins des revendications précédentes, **caractérisée en ce que** l'issue (23) peut être raccordée par l'intermédiaire d'au moins une vanne (22) au réservoir de dernier lavage (24) et/ou au récipient de trouble (26), la vanne (22) étant ouverte lorsque l'eau du collecteur et/ou le moût trouble et/ou le dernier lavage sont pompés de la cuve-filtre.
